# EUROPÄISCHE PATENTANMELDUNG

(11) **EP 0 849 076 A2**
(43) Veröffentlichungstag der Anmeldung: **24.06.1998**
(21) Anmeldenummer: 97122177.5
(22) Anmeldetag: 16.12.1997
(51) Int. Cl.: B41C 1/055

(54) **Verfahren und Vorrichtung zum Erzeugen einer Druckbildverteilung**

(30) Priorität: 21.12.1996 DE 19654018
(71) Anmelder: MAN Roland Druckmaschinen AG, 63075 Offenbach (DE)
(72) Erfinder: Wendt, Karsten, Dr.-Ing, 63179 Oberthausen (DE)
(74) Vertreter: Stahl, Dietmar

(57) **Zusammenfassung**

Beschrieben wird ein Verfahren sowie eine entsprechende Vorrichtung zur Erzeugung einer Druckbilderverteilung auf einer Druckplatte bzw. Druckform, welche eine Schicht eines thermisch aktivierbaren Materials aufweist. Bei derartigen Druckplatten bzw. Druckformen erfolgt das Setzen eines Bildpunktes durch eine lokale Erwärmung der thermisch aktivierbaren Schicht auf eine oberhalb der Grenz- bzw. Prozeßtemperatur des aktivierbaren Materials gelegene Temperatur, wobei diese Temperatur für eine bestimmte Zeitspanne oberhalb dieses Temperaturwertes liegen muß. Nachteilig bei einem derartigen Bebildern thermisch aktivierbarer Beschichtungen ist, daß es zu Verspannungen im Druckplatten- bzw. Druckformmaterial kommt und daß entsprechend der aufzubringenden Bildinformation eine hohe Laserleistung moduliert werden muß. Erfindungsgemäß lassen sich diese Nachteile dadurch umgehen, daß das thermisch aktivierbare Material der Druckplatte bzw. Druckform zumindest um den zu setzenden Bildpunkt herum auf eine Zwischentemperatur unterhalb der Grenz- bzw. Prozeßtemperatur des thermisch aktivierbaren Materials der Druckplatte bzw. Druckform vorerwärmt wird und durch die eigentliche Bebilderungseinheit lediglich die zum Setzen des Bildpunktes nötige Erwärmung erfolgt.

## Beschreibung

Die Erfindung betrifft ein Verfahren sowie eine Vorrichtung zum Erzeugen einer Druckbildverteilung gemäß dem Oberbegriff des Verfahrens bzw. des Vorrichtungsanspruches.

Bei der Herstellung von Druckformen, welche entweder in Form von auf einen Zylinder aufzuspannenden Platten oder Folien in einem speziellen Druckformbebilderungsgerät oder als entsprechend ausgebildete Oberfläche eines Maschinenzylinders mit einer Bebilderungseinrichtung zusammenwirken, müssen die druckenden bzw. die nichtdruckenden Oberflächenteile entsprechend der zu druckenden Information strukturiert werden. So ist es bei den direkt bebilderbaren Flachdruckverfahren bekannt, die auf einem Basismaterial aufgebrachte thermisch veränderbare Beschichtung durch Wärmeeinwirkung mittels einem Laserstrahl in oleophile, farbannehmende Partien umzuwandeln. Das thermisch veränderbare Beschichtungsmaterial weist dabei hydrophile Eigenschatten auf. Durch den Wärmeeintrag mittels Laserpunktbelichtung wird das thermisch aktivierbare Beschichtungsmaterial von einem hydrophilen in einen oleophilen, farbannehmenden Zustand umgesetzt bzw. transformiert. Nach einem derartigen Thermo-Direktverfahren muß die an einem zu setzenden Bildpunkt einzutragende Temperatur einen bestimmten Schwellwert überschreiten. Dies bedingt, daß die durch die Laserstrahlung eingebrachte Wärme (Energiemenge) lokal einen bestimmten Schwellwert überschreiten muß. So sind prozeßbehaftete Platten bekannt, bei denen die 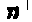 Bildsetztemperatur" beispielsweise 280° für eine vorgegebene Zeitdauer (z.B. 1-2 Mikrosekunden) überschreiten muß. Wird diese vorgegebene und sich nach den chemischen und physikalischen Eigenschaften des thermisch aktivierbaren Materials richtende Temperaturkurve nicht eingehalten - insbesondere die Grenz- bzw. Prozeßtemperatur nicht überschritten -, so wird der Bildpunkt nicht gesetzt. Der entsprechende Bildpunkt ist dann nicht definiert als gesetzt bzw. nicht gesetzt zuordenbar. Ein derartiges Druckformbeschreibungsverfahren mittels Wärmeertrag vermag dabei die Oberfläche nicht nur aufgrund einer physikalischen und/oder chemischen Veränderung des Beschichtungsmaterials hinsichtlich der zu druckenden Information zu strukturieren. Bekannt sind dabei auch Bebilderungsverfahren mittels thermischer Ablation, d.h. durch einen bildpunktweisen Energieeintrag mit ebenfalls einer zu überschreitenden Grenztemperatur sowie minimaler Einwirkzeit kommt es zu einem Abtragen des Beschichtungsmaterials beispielsweise durch Verdampfen oder das Volumen verändernde Umstrukturierungen.

Den zuvorstehend angedeuteten Bebilderungsverfahren mittels einer eine Wärmeenergie bildpunktweise in ein zu beschreibendes Substrat einbringenden Laserstrahlung ist dabei gemeinsam, daß in dem thermisch aktivierbaren Beschichtungsmaterial eine vorgegebene Grenz- bzw. Prozeßtemperatur für eine vorgegebene Zeitspanne zu überschreiten ist. Je nach Art des Bebilderungsverfahrens sowie nach den chemischen und physikalischen Beschaffenheiten des thermisch aktivierbaren Beschichtungsmaterials sind relativ hohe Laserleistungen innerhalb der vorgegebenen Mindesteinwirkungszeiten zu modulieren, was sich nur negativ auf die maximal erreichbare Geschwindigkeit zum Beschreiben gerade einer großformatigen Druckplatte bzw. Druckform auswirkt. Nachteilig bei diesen thermischen Bebilderungsverfahren mittels Laserstrahlung ist aber nicht nur die zu modulierende hohe Laserleistung sondern auch die insbesondere auf den Verbund von thermisch aktivierbarer Beschichtung und dem Basismaterial einzubringende Wärmeenergie. Je höher die als Grenz- bzw. Prozeßtemperatur, welche zum Setzen eines Bildpunktes unbedingt zu überschreiten ist, desto steiler fällt auch die Temperatur von diesem Bildpunkt in die Umgebung des Punktes ab. Dabei kann es gerade bei hohen Prozeßtemperaturen und entsprechenden Kombinationen aus thermisch aktivierbaren Beschichtungsmaterial und Trägermaterial zu thermisch verursachten Verspannungen kommen, so daß beispielsweise der Verbund zwischen Beschichtungsmaterial und Trägermaterial dauerhaft gelöst bzw. es zu einer Verformung in wenigstens einer dieser Schichtmaterialien kommt. Auch ist es möglich, daß eine bestimmte Art eines thermisch aktivierbaren Beschichtungsmaterials sehr gute thermische Beschriftungseigenschaften aufweist, aber aufgrund einer zu hohen Prozeß- bzw. Grenztemperatur wegen der thermischen Spannungen als Bebilderungsmaterial nicht in Frage kommt bzw. als ein solches Material nicht verwendet werden kann.

Aufgabe der vorliegenden Erfindung ist es daher, ein Verfahren sowie eine entsprechende Vorrichtung zur Erzeugung einer Druckbildverteilung auf einem thermisch bearbeitbaren Substrat derartig weiterzubilden, so daß unter Vermeidung der zuvorstehend genannten Nachteile eine sichere Strukturierung entsprechend der zu druckenden Information möglich ist.

Gelöst wird diese Aufgabe durch die kennzeichnenden Merkmale des Verfahrens- bzw. des Vorrichtungsanspruches. Weiterbildungen ergeben sich aus den entsprechenden Unteransprüchen.

Gemäß der Erfindung ist vorgesehen, daß zumindest ein Bereich um den mittels Laserstrahlung durch thermische Einwirkung zu setzenden Bildpunkt herum die Temperatur des zu bestrahlenden Materials (thermisch aktivierbare Beschichtung und/oder Basismaterial) auf eine Zwischentemperatur unterhalb der durch den Prozeß vorgegebenen Grenz- bzw. Prozeßtemperatur erwärmt wird, und daß durch die modulierte Laserstrahlung der Temperatur- Zeitverlauf in dem zu setzenden Bildpunkt des thermisch aktivierbaren Materials, ausgehend von der Vorwärmung auf die Zwischentemperatur für die vorgeschriebene Zeitspanne entsprechend dem vorgesehenen Temperaturprofil oberhalb der Grenz- bzw. Prozeßtemperatur erwärmt wird.

Allgemein ausgedrückt verwendet das erfindungsgemäße Verfahren somit eine zweistufige Wärmeeinwirkung auf das zu beschreibende Material, nämlich zunächst die Vorerwärmung des Platten- bzw. Druckformmaterials auf eine Temperatur unterhalb der Grenz- bzw. Prozeßtemperatur und letztlich die durch modulierte Laserstrahlung bildpunktweise Erwärmung des Platten- bzw. Druckformmaterials entsprechend dem vorgegebenen Temperaturverlauf auf eine Temperatur oberhalb der Grenz- bzw. Prozeßtemperatur.

Die Vorerwärmung des Bereiches um den zu setzenden bzw. zu beschriftenden Bildpunkt herum kann dabei flächendeckend über das gesamte Platten- bzw. Druckformmaterial erfolgen. Die gesamte zu beschreibende Druckplatte bzw. Druckform wird dann auf eine Temperatur unterhalb der für den Bebilderungsprozeß vorgesehenen Grenz- bzw. Prozeßtemperatur erwärmt. Dies kann beispielsweise durch eine elektrische Heizeinrichtung, welche nach Art eines Ofens aufgebaut ist, erfolgen. Auch ist es bei einer anderen Ausgestaltung der Erfindung möglich, lediglich einen größeren um den zu beschreibenden Bildpunkt herum gelegenen Bereich entsprechend vorzuerwärmen, diesen also auf eine Temperatur unterhalb der Grenz- bzw. Prozeßtemperatur des verwendeten Materials zu bringen. Auch diese lokale Vorerwärmung eines um einen zu setzenden Bildpunktes herum gelegenen Bereiches kann mittels einer elektrischen Heizeinrichtung erfolgen. Alternativ dazu wäre ebenfalls eine Vorerwärmung mittels einem aufgeweiteten Laserstrahl möglich, der die Platte bzw. die zu bebildernde Druckform in einen entsprechend großen Bereich um den zu setzenden Bildpunkt herum bestrahlt.

Ein Vorteil der lokalen Temperaturerhöhung um den eigentlich zu beschreibenden Bildpunkt herum ist dabei, das nicht die gesamte Druckplatte bzw. Druckform auf ein hohes Temperaturniveau nebst den damit verbundenen Nachteile der thermischen Ausdehnung (Gesamtausdehnung) gebracht werden muß. Neben einer solchen lokalen Vorwärmung mittels einem aufgeweiteten Laserstrahl wäre ebenfalls auch eine Vorerwärmung mittels einem Heißluftstrom oder durch entsprechend gerichtete IR-Strahlung denkbar.

Des weiteren erfolgt die Erläuterung einer Ausführungsvariante der Erfindung anhand der Zeichnungen.

Es zeigt:
- Fig. 1: einen Temperatur-Zeitverlauf bei der Vorerwärmung des gesamten Platten- bzw. Druckformmaterials,
- Fig. 2: einen Temperatur-Zeitverlauf bei der lokalen Vorerwärmung um den zu beschreibenden Bildpunkt herum, und
- Fig. 3: einen Temperatur-Zeitverlauf ohne die erfindungsgemäße Vorerwärmung.

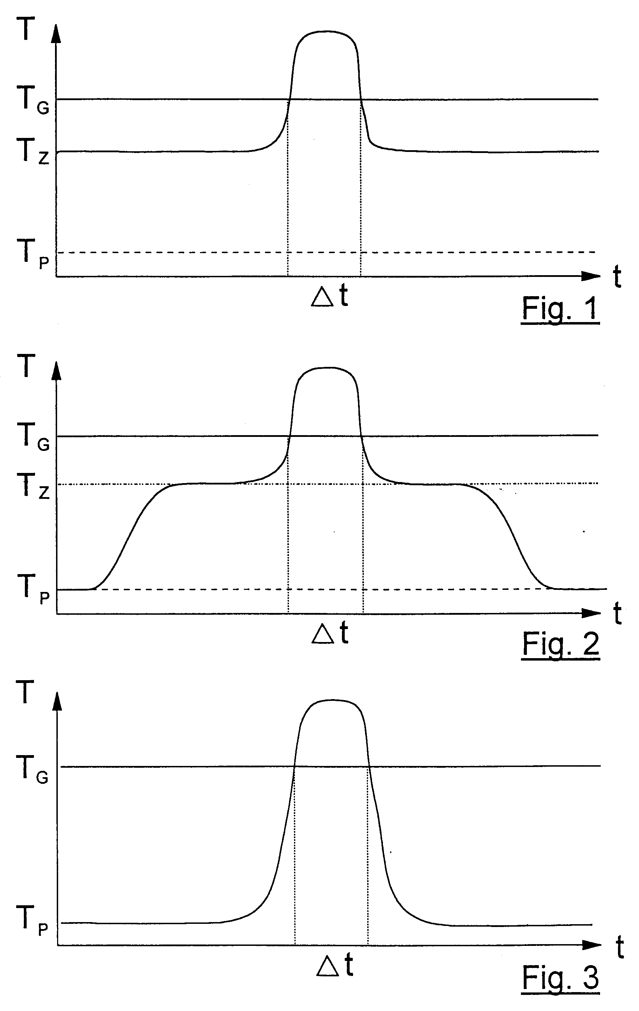

Zur Erläuterung der in den Figuren 1 bis 3 dargestellten Temperatur-Zeitverläufe T, t sei vorausgesetzt, daß das Beschreiben einer mittels modulierter Laserstrahlung thermisch umzuwandelnder Druckplatte bzw. Druckform zeilenweise erfolgt. Demzufolge wird ein einen fokusierten Laserstrahl auf das Platten- bzw. Druckformmaterial sendender Bebilderungskopf zeilenweise über die Platten- bzw. Druckformfläche bewegt. Die Platte bzw. die Druckform kann dabei auf einer ebenen Unterlage aber auch auf einem Zylinder aufgespannt sein.

Figur 3 zeigt den herkömmlichen Temperatur-Zeitverlauf T, t der sich ergibt, wenn das Platten- bzw. Druckformmaterial im zu setzenden Bildpunkt ausschließlich durch die Wärmeeinwirkung des Laserstrahls von der Platten- bzw. Druckformtemperatur T_{P} auf die oberhalb der Grenz- bzw. Prozeßtemperatur T_{G} gelegene Temperatur entsprechend dem skizzierten Verlauf verbracht wird. Entsprechend der Verfahrgeschwindigkeit des Bebilderungskopfes relativ zur Platten- bzw. Druckformoberfläche, die entsprechend aufeinander abgestimmt sind, wird somit das Platten- bzw. Druckformmaterial für eine Zeitspanne ΔT auf eine Temperatur oberhalb der Grenz- bzw. Prozeßtemperatur T_{G} erwärmt. Nachdem sich der Bebilderungskopf mit dem den Wärmeeintrag erzeugenden Laserstrahl weiter über das Platten- bzw. Druckformmaterial wegbewegt hat, nimmt die Temperatur des thermisch aktivierbaren Materials entsprechend dem in Figur 3 skizzierten Verlauf wieder ab.

Wesentlich ist dabei, daß entsprechend dem verwendeten thermisch aktivierbaren Beschichtungsmaterial der Platte bzw. der Druckform das Überschreiten der Grenz- bzw. Prozeßtemperatur T_{G} für eine vorgebende Mindestseitspanne ΔT durchgeführt wird. Nur dann kommt es zu einer dauerhaften physikalischen und/oder chemischen Umwandlung des thermisch aktivierbaren Platten- bzw. Druckformmaterials.

In Figur 1 ist ein Temperatur-Zeitverlauf wiedergegeben, bei dem die gesamte Platte bzw. Druckform durch eine Heizvorrichtung von der Platten- bzw. Druckformtemperatur T_{P} auf eine unterhalb der Grenz- bzw. Prozeßtemperatur T_{G} gelegene Zwischentemperatur T_{z} erwärmt wird. Beim Verfahren des Bebilderungskopfes über die Oberfläche der Platte bzw. der Druckform wird nun das Plattenmaterial (thermisch aktivierbare Schicht) ausgehend von der Zwischentemperatur T_{z} für die vorgegebene Zeitspanne ΔT (Einwirkzeit) auf eine Temperatur oberhalb der Grenz- bzw. Prozeßtemperatur T_{G} erwärmt. Demzufolge ist eine geringere Laserleistung zu modulieren als dies bei einem Temperaturverlauf gemäß der anhand der Figur 3 beschriebenen Situation der Fall ist. In der Situation gemäß Figur 3 muß der Laserstrahl die gesamte Wärmemenge zum Erwärmen des thermisch aktivierbaren Materials von der Platten- bzw. Druckformtemperatur T_{P} auf die Temperatur oberhalb der Grenz- bzw. Prozeßtemperatur T_{G} aufbringen, wohingegen im Fall der gesamtflächigen Vorerwärmung der Platte bzw. der Druckform lediglich ein Temperaturhub von der Zwischentemperatur T_{z} auf eine Temperatur oberhalb der Grenz- bzw. Prozeßtemperatur T_{G} für die vorgegebene Zeitspanne ΔT nötig ist.

Figur 2 zeigt einen Temperatur-Zeitverlauf, welcher sich ergibt, wird zunächst eine Umgebung um den zu beschreibenden Bildpunkt herum auf eine Zwischentemperatur T_{z} vorerwärmt und daraufhin, ausgehend von diesem Temperaturniveau T_{z} der restliche, oberhalb der Grenz- bzw. Prozeßtemperatur T_{G} zu erzielende Temperaturverlauf durch Einbringung der modulierten Laserstrahlung erzeugt wird. Durch die Vorerwärmung erfolgt zunächst ein Erwärmen des thermisch aktiverbaren Materials (der Platte bzw. der Druckform insgesamt) von der Platten- bzw. Druckformtemperatur T_{P} auf die dafür vorgesehene Zwischentemperatur T_{z}. Dabei ist insbesondere vorgesehen, daß die Verfahrgeschwindigkeit des die Lasereinrichtung beinhaltenden Bebilderungskopfes derartig auf die Heizleistung der Vorerwärmung abgestimmt ist, so daß sich ein zeitlich stationärer Temperaturzustand hinsichtlich der zu erreichenden Zwischentemperatur T_{z} ergibt. Sodann erfolgt wie im Ausführungsbeispiel gemäß Figur 1 durch den modulierten Laserstrahl ein verbringen des thermisch aktivierbaren Platten- bzw. Druckformmaterials entsprechend der vorgesehenen Mindesteinwirkzeit ΔT auf eine Temperatur oberhalb der Grenz- bzw. Prozeßtemperatur T_{G}. Danach kommt es aufgrund von Wärmeabstrahlung bzw. einer sonstigen Wärmeabgabe des Platten- bzw. Druckformmaterials zu einer Abkühlung wieder auf die Zwischentemperatur T_{z} gemäß Vorerwärmung und je nach Größe des 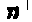 nachlaufenden Bereiches der Vorerwärmung" zu einer Abkühlung auf die Platten- bzw. Druckformtemperatur T_{P}.

### Bezugszeichenliste

- T: Temperatur
- t: Zeit
- T_{G}: Grenz- bzw. Prozeßtemperatur
- T_{z}: Zwischentemperatur
- T_{P}: Platten- bzw. Druckformtemperatur
- ΔT: Zeitintervall

## Patentansprüche

1. Verfahren zum Erzeugen einer Druckbildverteilung auf einer Druckplatte bzw. Druckform, wobei eine Schicht der Druckplatte bzw. Druckform aus einem thermisch aktivierbaren Material in jedem zu erzeugenden Bildpunkt lokal für eine vorgegebene Zeitspanne auf eine Temperatur oberhalb einer durch das thermisch aktivierbare Material bedingte Grenz- bzw. Prozeßtemperatur erwärmt wird,
**dadurch gekennzeichnet**,
daß die thermisch aktivierbare Schicht der Druckplatte bzw. Druckform zumindest in einem Bereich um den zu setzenden Bildpunkt herum auf eine Zwischentemperatur unterhalb der Grenz- bzw. Prozeßtemperatur des Materials der thermisch aktivierbaren Schicht erwärmt wird und die lokale Erwärmung des zu setzenden Bildpunktes von dieser Zwischentemperatur ausgehend erzeugt wird.

2. Verfahren nach Anspruch 1,
**dadurch gekennzeichnet**,
daß die Schicht des thermisch aktivierbaren Materials der Druckplatte bzw. Druckform in einem Bereich um den zu setzenden Bildpunkt herum auf eine Zwischentemperatur oberhalb der Platten- und Druckformtemperatur und unterhalb der Grenz- bzw. Prozeßtemperatur erwärmt wird, wobei die Größe (Fläche) dieses um den zu setzenden Bildpunkt gelegenen Bereiches ein Vielfaches der Ausdehnung des zu setzenden Bildpunkt beträgt.

3. Verfahren nach Anspruch 1,
**dadurch gekennzeichnet**,
daß die gesamte Fläche des thermisch aktivierbaren Materials der Druckplatte bzw. Druckform auf eine Zwischentemperatur oberhalb der Platten- und Druckformtemperatur und unterhalb der Grenz- bzw. Prozeßtemperatur des aktivierbaren Materials erwärmt wird.

4. Verfahren nach einem der vorhergehenden Ansprüche,
**dadurch gekennzeichnet**,
daß die bildpunktweise Erwärmung des thermisch aktivierbaren Materials der Druckplatte bzw. Druckform mittels Laserstrahlung erfolgt, wobei die Strahlungsleistung des Lasers auf die Erwärmung des thermisch aktivierbaren Materials der Druckplatte bzw. Druckform von der Zwischentemperatur auf einen vorgegebenen Wert oberhalb der Grenz- bzw. Prozeßtemperatur des thermisch aktivierbaren Materials abgestimmt ist.

5. Verfahren nach einem der vorhergehenden Ansprüche,
**dadurch gekennzeichnet**,
daß das Vorerwärmen des thermisch aktivierbaren Materials der Druckplatte bzw. Druckform auf eine Zwischentemperatur oberhalb der Platten- und Druckformtemperatur und unterhalb der durch das Material bedingten Grenz- bzw. Prozeßtemperatur durch elektromagnetische Strahlung erfolgt.

6. Verfahren nach Anspruch 5,
**dadurch gekennzeichnet**,
daß die Erwärmung des thermisch aktivierbaren Materials der Druckplatte bzw. Druckform durch Infrarot-Strahlung erfolgt.

7. Verfahren nach Anspruch 5,
**dadurch gekennzeichnet**,
daß die Erwärmung des thermisch aktivierbaren Materials durch Laserstrahlung erfolgt.

8. Verfahren nach Anspruch 5,
**dadurch gekennzeichnet**,
daß die Erwärmung des thermisch aktivierbaren Materials der Druckplatte bzw. Druckform auf eine Zwischentemperatur unterhalb der Grenz- bzw. Prozeßtemperatur des Materials durch einen auf die Materialschicht gerichteten Heißgasstrom erfolgt.

9. Verfahren nach Anspruch 5,
**dadurch gekennzeichnet**,
daß die Erwärmung des thermisch aktivierbaren Materials der Druckplatte bzw. Druckform auf eine Zwischentemperatur unterhalb der Grenz- bzw. Prozeßtemperatur des Materials durch Erwärmung eines mit dem thermisch aktivierbaren Material in Wärmekontakt stehenden Körpers erfolgt.

10. Vorrichtung zur Erzeugung einer Druckbildverteilung auf einer Druckplatte bzw. Druckform zur Durchführung des Verfahrens nach einem der Ansprüche 1 bis 9, wobei die Druckplatte bzw. Druckform eine Schicht eines thermisch aktivierbaren Materials aufweist und mit einer Beschreibungseinrichtung zur bildpunktweisen Erwärmung des thermisch aktivierbaren Materials der Druckplatte bzw. Druckform auf eine Temperatur oberhalb einer Grenz- bzw. Prozeßtemperatur des thermisch aktivierbaren Materials,
**dadurch gekennzeichnet**,
daß zusätzlich zu der das thermische Material auf eine Temperatur oberhalb der Grenz- bzw. Prozeßtemperatur des thermisch aktivierbaren Materials verbringenden Beschreibungseinrichtung eine Heizeinrichtung vorgesehen ist, durch welche zumindest ein Bereich um den jeweils zu beschreibenden Bildpunkt herum auf eine unterhalb der Grenz- bzw. Prozeßtemperatur des thermisch aktivierbaren Materials erwärmbar ist.

11. Verfahren nach Anspruch 10,
**dadurch gekennzeichnet**,
daß durch die zusätzliche Heizeinrichtung die Druckplatte bzw. Druckform in einem Bereich um den zu setzenden Bildpunkt herum auf eine Zwischentemperatur oberhalb der Platten- und Druckformtemperatur und unterhalb der Grenz- bzw. Prozeßtemperatur erwärmbar ist, wobei die Größe (Fläche) dieses um den zu setzenden Bildpunkt gelegenen Bereiches ein Vielfaches der Ausdehnung des zu setzenden Bildpunkt beträgt.

12. Verfahren nach Anspruch 10,
**dadurch gekennzeichnet**,
daß durch die zusätzliche Heizeinrichtung die gesamte Fläche des thermisch aktivierbaren Materials der Druckplatte bzw. Druckform auf eine Zwischentemperatur oberhalb der Platten- und Druckformtemperatur und unterhalb der Grenz- bzw. Prozeßtemperatur des aktivierbaren Materials erwärmbar ist.

13. Verfahren nach einem der vorhergehenden Ansprüche,
**dadurch gekennzeichnet**,
daß die Beschreibungseinrichtung einen Laser aufweist, wobei die Strahlungsleistung des Lasers für eine Erwärmung des thermisch aktivierbaren Materials der Druckplatte bzw. Druckform von der Zwischentemperatur auf einen vorgegebenen Wert oberhalb der Grenz- bzw. Prozeßtemperatur des thermisch aktivierbaren Materials ausgelegt ist.

14. Verfahren nach einem der vorhergehenden Ansprüche,
**dadurch gekennzeichnet**,
daß durch die zusätzliche Heizeinrichtung ein Vorerwärmen des thermisch aktivierbaren Materials der Dtuckplatte bzw. Druckform auf eine Zwischentemperatur oberhalb der Platten- bzw. Druckformtemperatur und unterhalb der durch das Material bedingten Grenz- bzw. Prozeßtemperatur mittels elektromagnetischer Strahlung durchführbar ist.

15. Verfahren nach Anspruch 14,
**dadurch gekennzeichnet**,
daß durch die zusätzliche Heizeinrichtung eine Erwärmung des thermisch aktivierbaren Materials der Druckplatte bzw. Druckform mittels Infrarot-Strahlung durchführbar ist.

16. Verfahren nach Anspruch 14,
**dadurch gekennzeichnet**,
daß durch die zusätzliche Heizeinrichtung eine Erwärmung des thermisch aktivierbaren Materials mittels Laserstrahlung durchführbar ist.

17. Verfahren nach einem der Ansprüche 10 - 13,
**dadurch gekennzeichnet**,
daß durch die zusätzliche Heizeinrichtung eine Erwärmung des thermisch aktivierbaren Materials der Druckplatte bzw. Druckform auf eine Zwischentemperatur unterhalb der Grenz- bzw. Prozeßtemperatur des Materials mittels einem auf die Materialschicht gerichteten Heißgasstrom durchführbar ist.

18. Verfahren nach einem der Ansprüche 10 - 13,
**dadurch gekennzeichnet**,
daß durch die zusätzliche Heizeinrichtung eine Erwärmung des thermisch aktivierbaren Materials der Druckplatte bzw. Druckform auf eine Zwischentemperatur unterhalb der Grenz- bzw. Prozeßtemperatur des Materials mittels Erwärmung eines mit dem thermisch aktivierbaren Material in Wärmekontakt stehenden Körpers durchführbar ist.
